Europäisches Patentamt

European Patent Office

Office européen des brevets

(11) Publication number: **0 197 602**
**B1**

## (12) EUROPEAN PATENT SPECIFICATION

(45) Date of publication of patent specification: **28.11.90**

(21) Application number: **86200546.9**

(22) Date of filing: **02.04.86**

(51) Int. Cl.⁵: **G 11 B 15/665, G 11 B 15/61**

(54) **Magnetic-tape apparatus.**

(30) Priority: **09.04.85 NL 8501027**

(43) Date of publication of application:
**15.10.86 Bulletin 86/42**

(45) Publication of the grant of the patent:
**28.11.90 Bulletin 90/48**

(84) Designated Contracting States:
**CH DE FR GB IT LI NL**

(56) References cited:
**FR-A-2 013 052**
**GB-A-2 000 894**
**GB-A-2 020 878**
**US-A-3 512 694**
**US-A-3 516 146**
**US-A-3 583 656**
**US-A-3 674 942**
**US-A-3 979 772**

**PATENTS ABSTRACTS OF JAPAN, vol. 6, no.**
**152 (P-134)1030r, 12th August 1982, page 5 P**
**134; & JP - A - 57 69 565**

(73) Proprietor: **N.V. Philips' Gloeilampenfabrieken**
**Groenewoudseweg 1**
**NL-5621 BA Eindhoven (NL)**

(72) Inventor: **Muller, Johannes Cornelis Antonius**
**c/o INT. OCTROOIBUREAU B.V. Prof. Holstlaan 6**
**NL-5656 AA Eindhoven (NL)**

(74) Representative: **Smit, Frederik Jan et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a magnetic-tape apparatus comprising a deck carrying a cylindrical drum assembly provided with at least one rotatable magnetic head, on which deck a supporting member carrying at least two tape guides which are spaced from one another is guided for rectilinear movement towards and away from the drum assembly, the arrangement being such that when a tape cassette is positioned in or on the apparatus a movement of the supporting member towards the drum assembly causes a part of the magnetic tape in the cassette to be led towards the drum assembly, after which movement, when the supporting member is in an end position said part of the magnetic tape is wrapped around a part of the circumference of the drum assembly by the tape guides, in which end position of the supporting member the tape guides are positioned relative to the drum assembly by at least one positioning element.

A magnetic-tape apparatus of this kind is disclosed in U.S. Patent Specification 3,512,694. In this known apparatus the tape guides which wrap the magnetic tape around the circumference of the drum assembly are resiliently connected to the supporting member by means of blade springs. In order to ensure a sufficiently accurate transport of the tape around the drum assembly, which is necessary in such an apparatus because of the very small width of the tracks recorded on the magnetic tape, the drum assembly should be positioned accurately on the deck. The deck further carries positioning elements which position the tape guides accurately in the end position of the supporting member after the length of magnetic tape has been wrapped around the circumference of the drum assembly and after flexure of the blade springs. For a correct positioning of the drum assembly and the two tape guides relative to one another, both the drum assembly and the positioning elements should be mounted accurately on the deck and, in addition, the deck must have a high rigidity and dimensional stability. Despite this accurate mounting of the drum assembly and the positioning elements on the deck, tolerances between these parts are liable to give rise to positioning errors, so that these tolerances necessitate further adjustments of said parts relative to each another. As a result of this, it is comparatively intricate to position the tape guides relative to the drum assembly in the known magnetic tape apparatus, so that even when mass-produced the known apparatus is comparatively expensive.

It is the object of the invention to provide an accurate and simple positioning of the tape guides relative to the drum assembly in a magnetic-tape apparatus of the kind specified in the opening paragraph by directly coupling the drum assembly and the supporting member.

To this end the invention is characterized in that the tape guides are rigidly connected to the supporting member, the positioning element is located on a non-rotatable drum section of the drum assembly and the supporting member carries positioning means which cooperate with the positioning element to position the tape guides relative to the drum assembly in the end position of the supporting member.

Thus, in the end position of the supporting member the positioning means on the supporting member are connected directly to the positioning element located on a non-rotatable part of the drum assembly. Since the positioning means are rigidly connected to the tape guides this direct connection enables an accurate positioning of the tape guides relative to the drum assembly to be obtained. The direct connection results in the positioning tolerances of the various parts being effectively eliminated. Thus, the construction in accordance with the invention enables a correct positioning to be obtained in a simple and rapid manner, which positioning is maintained even after prolonged use. Therefore, this construction is very suitable for use in cheap mass-produced apparatuses.

An embodiment of the invention is characterized in that the positioning means comprise two projections on the front side of which side faces the drum assembly, and the positioning element is constructed as a recess in the outer wall of the non-rotatable drum section, which recess is engaged by the projections in the end position of the supporting member. As a result of this construction the projections can directly engage the recess in the outer wall of the drum section at the end of the movement of the supporting member towards the end position. This construction ensures that the positioning means and the positioning element can be coupled smoothly to each other and enables a correct positioning of the tape guides relative to the drum assembly to be obtained.

In this respect another preferred embodiment is characterized in that the projections and the recess are conical-shaped. This is advantageous for a correct and smooth positioning of the tape guides relative to the drum assembly.

In this respect an embodiment which is easy to produce is characterized in that the recess is a circumferential groove in the outer wall of the non-rotatable drum section. Such a circumferential groove can be formed simply yet accurately in the outer wall of the drum section.

Another preferred embodiment of the invention, in which the drum assembly comprises a lower drum and an upper drum, is characterized in that said non-rotatable drum section of the drum assembly, on which the positioning element is located, is constituted by the lower drum. Thus, the lower drum is employed for positioning the tape guides. This is advantageous because the supporting member and the lower drum and can easily be arranged at substantially the same level relative to the deck.

Another preferred embodiment of the invention, in which the supporting member is constituted by a sliding plate, is characterized in that the front side of the sliding plate which faces the drum assembly comprises a concavely curved wall whose centre of curvature in the end position of the sliding plate lies substantially on the axis of the drum assembly and which carries the projections. In the end position of the sliding plate the curved wall enables this plate to be positioned at the shortest possible distance from the drum assembly, so that the projections project only a comparatively small distance from the curved wall of the sliding plate. This enables a comparatively compact construction to be obtained.

In this respect a further embodiment is characterized in that in the end position of sliding plate the projections are urged into the recess under spring force. This ensures that in the end position of the sliding plate the projections correctly engage against the walls of the recess and that the tape guides and the drum assembly are accurately positioned relative to each other.

Yet another preferred embodiment of the invention is characterized in that at its rear side which is remote from the drum assembly the sliding plate carries an adjusting member by means of which the sliding plate, when in its end position, is pivotable about a connecting line between the projections. In this way it is possible to correct the tape path, if necessary, by tilting the sliding plate about this connecting line.

Another preferred embodiment of the invention is characterized in that the sliding plate constitutes an integral unit with the projections and the tape guides, which unit is manufactured from a thermosetting plastics. The use of an integral unit, whose shape is defined by the mould, ensures that the positions of the projections and the tape guides relative to each other are defined accurately without necessitating any further operations.

A magnetic-tape apparatus embodying the invention will now be described in more detail, by way of example, with reference to the accompanying drawings. In the drawings:

Fig. 1 is a perspective view of a magnetic-tape apparatus in accordance with the invention, in which the magnetic tape is shown schematically for the sake of clarity and in which the apparatus is in the stop condition

Fig. 2 is a plan view drawn to another scale, showing the apparatus of Fig. 1 in the stop condition;

Fig. 3 is an underneath view drawn to another scale, showing the apparatus of Fig. 1 in the stop condition;

Fig. 4 is a plan view similar to Fig. 2, showing the apparatus in a fast-wind condition;

Fig. 5 is an underneath view similar to Fig. 3, showing the apparatus in the same fast-wind condition as in Fig. 4;

Fig. 6 is a perspective view similar to Fig. 1, showing the magnetic-tape apparatus in the normal operating condition;

Fig. 7 is a plan view similar to Figs. 2 and 4 but showing the apparatus in the normal operating condition;

Fig. 8 is an underneath view similar to Figs. 3 and 5 but showing the apparatus in the normal operating condition;

Fig. 9 is a sectional view taken on the lines IX-IX in Fig. 7 and showing part of the lower drum of the drum assembly in outside elevation;

Fig. 10 is a schematic plan view drawn to another scale, showing part of the apparatus of Fig. 1 in the normal operating condition, but showing the drum assembly and the tape guides in positions other than those shown in Fig. 1;

Fig. 11 is a schematic view looking in the direction of the arrow XI in Fig. 10;

Fig. 12 is a schematic view looking in the direction of the arrow XII in Fig. 10.

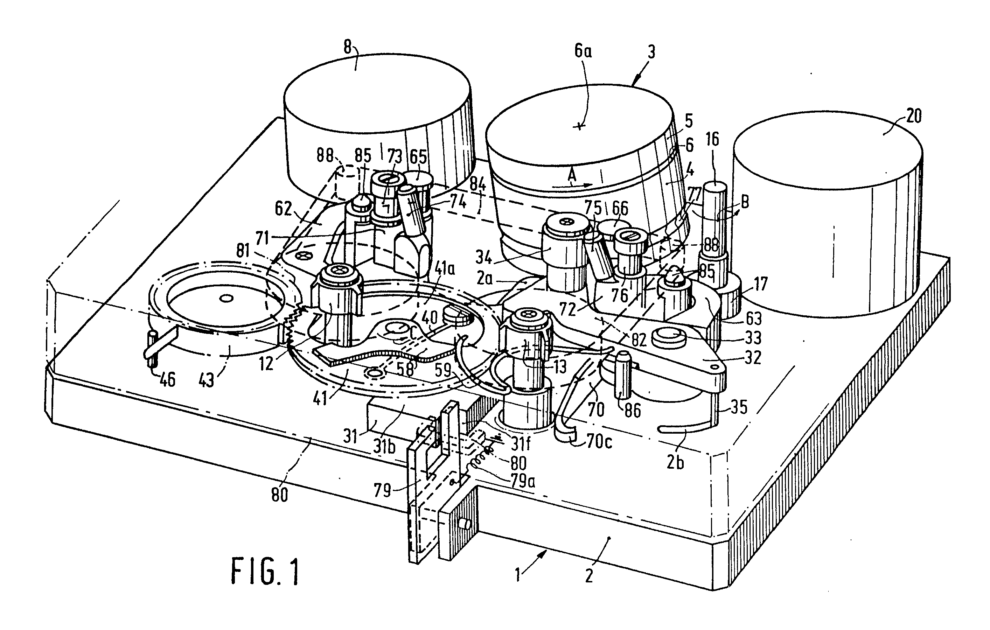

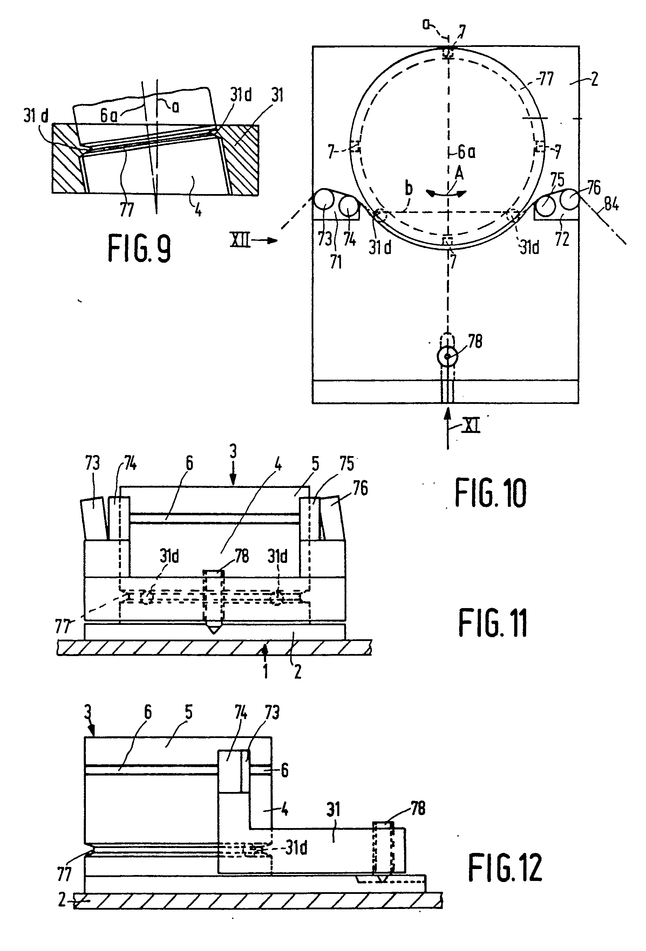

The magnetic-tape apparatus shown in Fig. 1 has a deck 1 which comprises a comparatively rigid deck plate 2 at the upper side of the apparatus. The deck plate 2 carries a cylindrical drum assembly 3, which comprises two non-rotatable coaxial drum sections constituted by a lower drum 4 and an upper drum 5 (see also Figs. 10 and 11). A head disk 6 is mounted for rotation between the lower drum and the upper drum and carries a plurality of magnetic heads 7, for example, four (see Fig. 10). The axis of the lower drum 4 and the upper drum 5 coincides with the axis of rotation 6a of the disk 6. The axis of rotation 6a is inclined relative to the deck plate 2. The head disk 6 is driven by means of a motor 8, which is arranged beside the drum assembly 3 and whose shaft 8a is connected to a pulley 9 underneath the deck plate 2. The axis of the motor shaft 8a extends parallel to the axis of rotation 6a. A belt 10 passes round the pulley 9 and round another pulley 11 which is fixedly connected to the shaft of the head disk 6. The normal direction of rotation of the head disk 6 is as indicated by the arrow A.

It is to be noted that alternatively the upper drum 5 may carry the magnetic heads 7 and may be rotatable about the axis of rotation 6a. In that case the head disk 6 may be dispensed with.

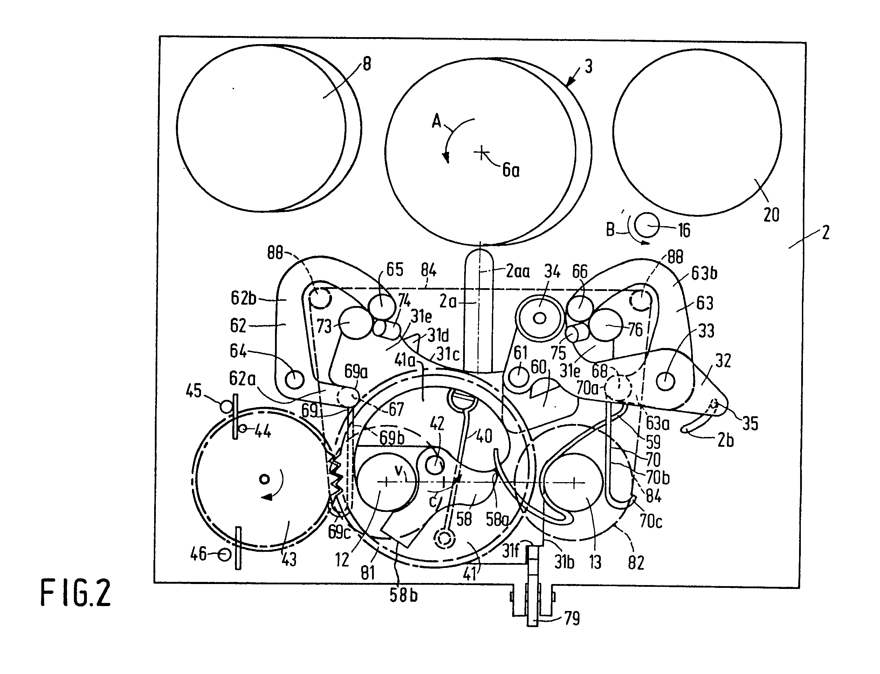

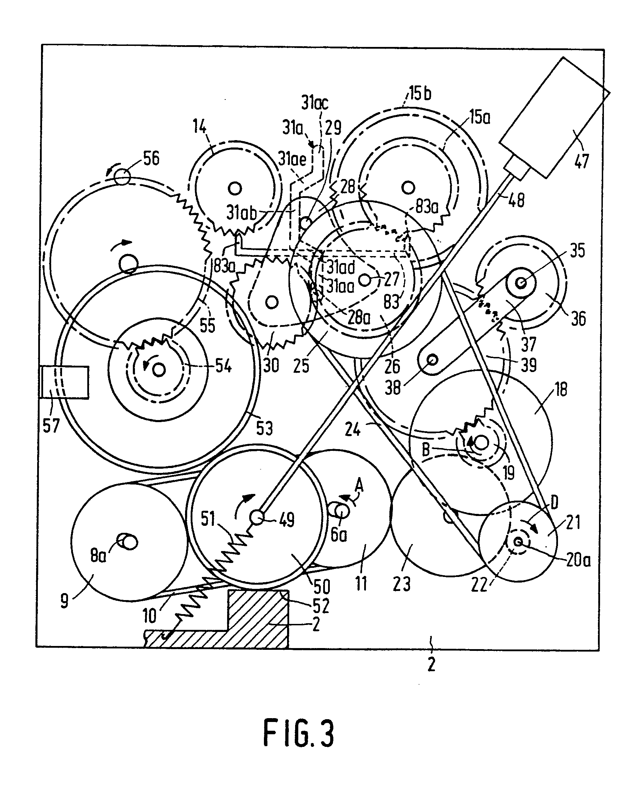

Two spaced winding spindles 12 and 13 project above the deck plate 2. In the plan view of Fig. 2 the spindles are situated substantially at the base vertices of an isosceles triangle whose apex is defined by the axis of rotation 6a. The winding spindles 12 and 13 are mounted for rotation on journals which are secured to the deck plate 2. The winding spindle 12 is connected to a fast-wind toothed idler wheel 14 and the spindle 13 to a fast-wind toothed idler wheel 15a and a normal mode toothed idler wheel 15b. The normal-node idler wheel 15b is connected to the winding spindle 13 by means of a friction clutch in the customary manner. It is to be noted that the idler wheel 14 is coaxial with the winding spindle 12 and the idler wheels 15a and 15b are coaxial with the winding spindle 13 and that the axes of the idler wheels and the winding spindles extend perpendicularly to the major surface of the deck plate 2. This applies also to the axis of rotation of a capstan 16 which projects from the deck plate 2. The capstan 16 is journalled in a bearing bush 17 on the deck plate 2 and underneath the deck plate 2 it is rigidly connected to a flywheel 18 and to a gear wheel 19 (Fig. 3). For driving the capstan 16 a drive motor 20 is arranged beside the drum assembly 3 and comprises a motor shaft 20a carrying a pulley 21 and a gear wheel 22 underneath the deck plate 2. The gear wheel 22 drives the capstan 16 via an idler wheel 23 in the direction indicated by the arrow B.

A belt 21 passes round the pulley 21 and a pulley 25. The pulley 25 is rigidly connected to a gear wheel 26. The pulley 25 and the gear wheel 26 are mounted on a journal 27 which is secured to a coupling plate 28 which is pivotable relative to the deck plate 2 about a spindle 29. Further, a gear wheel 30, which meshes with the gear wheel 26, is journalled in the coupling plate 28.

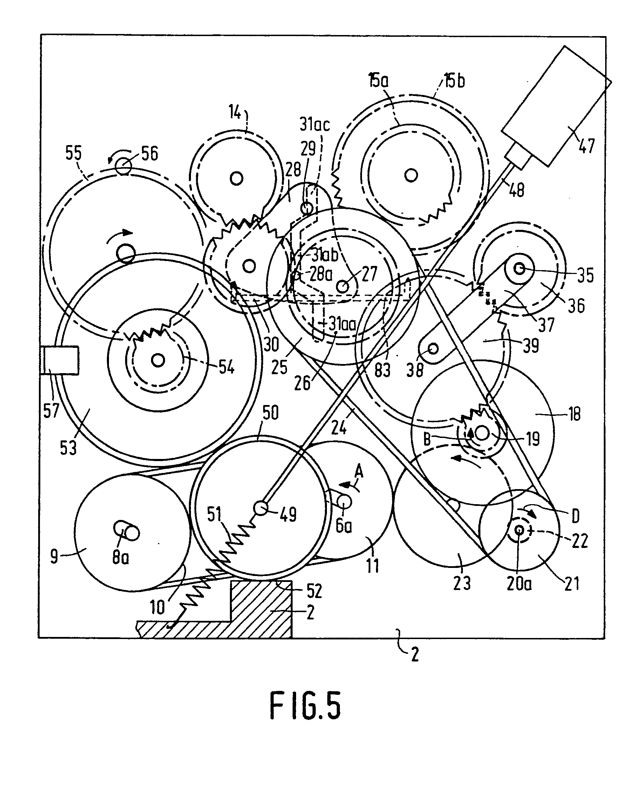

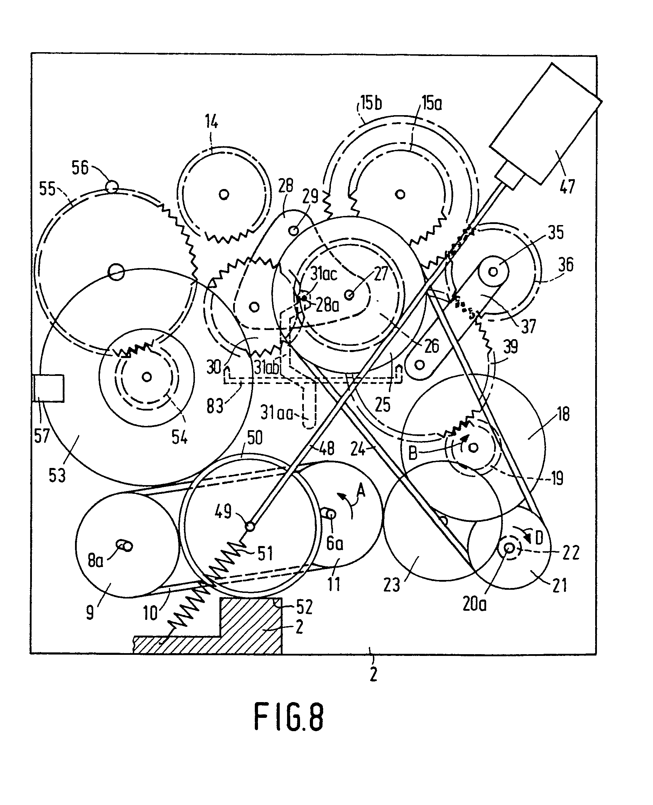

The upper surface of the deck plate 2 carries a supporting member 31 in the form of a sliding plate which, viewed in the plan view of Fig. 2, is rectilinearly slidable in a direction perpendicular to a connecting line v between the axes of rotation of the winding spindles 12 and 13 and which for this purpose is guided in a slot 2a in the deck plate 2, the longitudinal axis 2aa of the slot extending perpendicularly to said connecting line v. A pin 28a which is rigidly connected to the coupling plate 28 extends through the slot 2a and is guided in a groove 31a in the lower side of the sliding plate 31. As is shown in Fig. 3, this groove has a special shape and serves as a control means for controlling the coupling plate 28 during the movement of the sliding plate 31 away from or towards the drum assembly 3. As shown in Figs. 3, 5 and 8 the pin 28a may be situated in a section 31aa of the groove 31a (Fig. 3), in a section 31ab (Fig. 5) or in a section 31ac (Fig. 8). All three of these sections extend parallel to the longitudinal axis 2aa of the slot 2a, the axis of the section 31ab being situated to the left of the spindle 29 as viewed in Fig. 3, the axis of the section 31ac being situated to the right of the spindle 29, and the axis of the section 31aa being situated slightly further to the right of the spindle 29 than the section 31ac. An oblique section 31ad extends between the sections 31aa and 31ab and an oblique section 31ae extends between the sections 31ab and 31ac. In the stop position of the apparatus as shown in Fig. 3 the pin 28a is situated in the rightmost section 31aa, so that the coupling plate 28 is in a position such that the gear wheel 26 meshes with the fast-wind idler wheel 15a. By moving the sliding plate 31 over a comparatively short distance towards the drum assembly 3 the gear wheel 26 remains in mesh with the fast-wind idler wheel 15a and by moving the sliding plate 31 slightly further towards the drum assembly the pin 28a enters the groove section 31ab, as a result of which the coupling plate 28 is pivoted about the spindle 29 into the position shown in Fig. 5, in which the gear wheel 30 meshes with the fast-wind idler wheel 14. In this position the gear wheel 26 has become disengaged from the fast-wind idler wheel 15a as a result of the pivotal movement of the coupling plate 28. By a final movement of the pin 28a in the groove section 31ac the coupling plate 28 can be moved into a position in which both the gear wheel 26 and the gear wheel 30 are disengaged from the idler wheels 14 and 15a. It is noted that the slot 2a is wide enough to allow the pin 28a to move between the section 31ab and the sections 31aa and 31ac of the groove 31a in the plate 31. The above described idler wheel operation and the hereafter described pressure-roller and tape guide operations are disclosed and described in the non-prepublished European patent application no. 0 197 603 (PHN1135 herein incorporated by reference.

A pressure-roller lever 32 is pivotable about a pivot 33 on the upper side of the deck plate 2. The pressure-roller lever 32 is constructed as a two-armed lever and at the free end of one of its arms it carries a pressure roller 34. The other arm of the lever 32 carries a pin 35 at its free end, which pin is movable in an arcuate slot 2b in the deck plate 2 (fig. 2). As is shown in Fig. 3 the pin 35 carries a gear wheel 36 underneath the deck plate 2 (Fig. 3) and the pin is mounted on the end portion of an arm 37. The other end of the arm 37 carries a journal 38, by means of which the arm 37 is pivotable relative to the deck plate 2. A gear wheel 39 is rotatable about the journal 38 and meshes with the gear wheel 36 and also with the gear wheel 19. When the pressure-roller is lever 32 is pivoted the arm 37 is also pivoted via the pin 35, the arm 37 being pivotable from a position shown in Fig. 3 to a position shown in Fig. 8, in which the gear wheel 36 meshes with the normal-mode idler wheel 15b. Thus, the motor 20 can drive the fast-wind idler wheel 14, the fast-wind idler wheel 15a or the normal-mode idler wheel 15b.

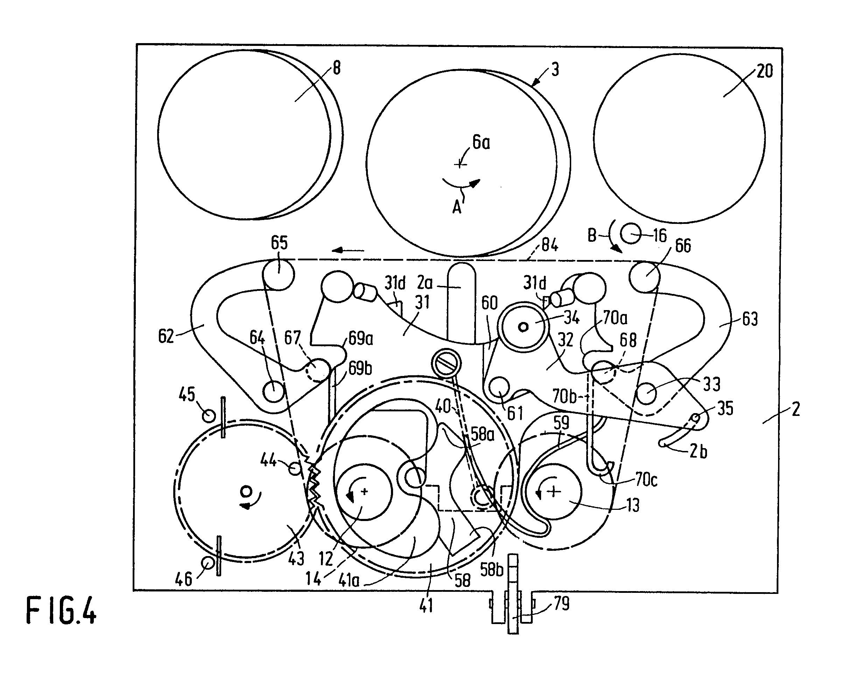

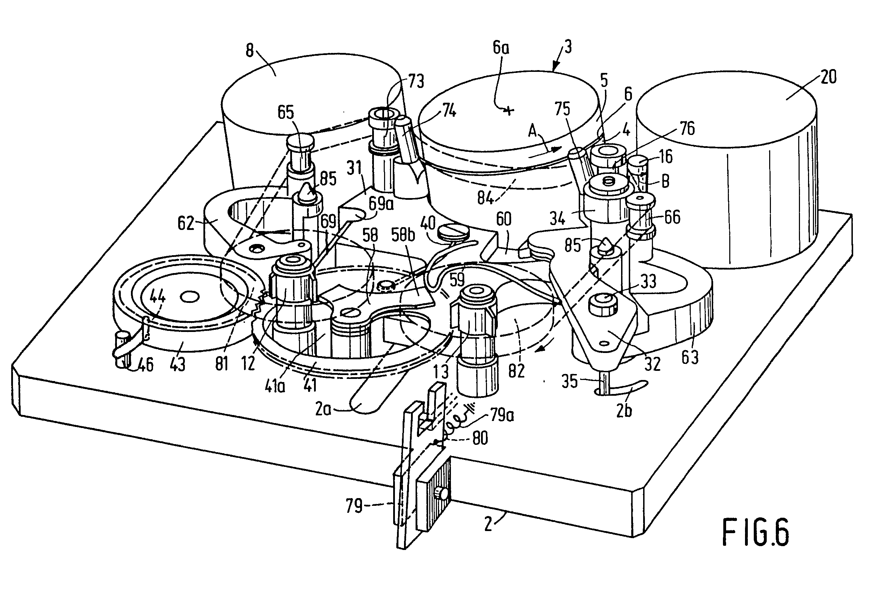

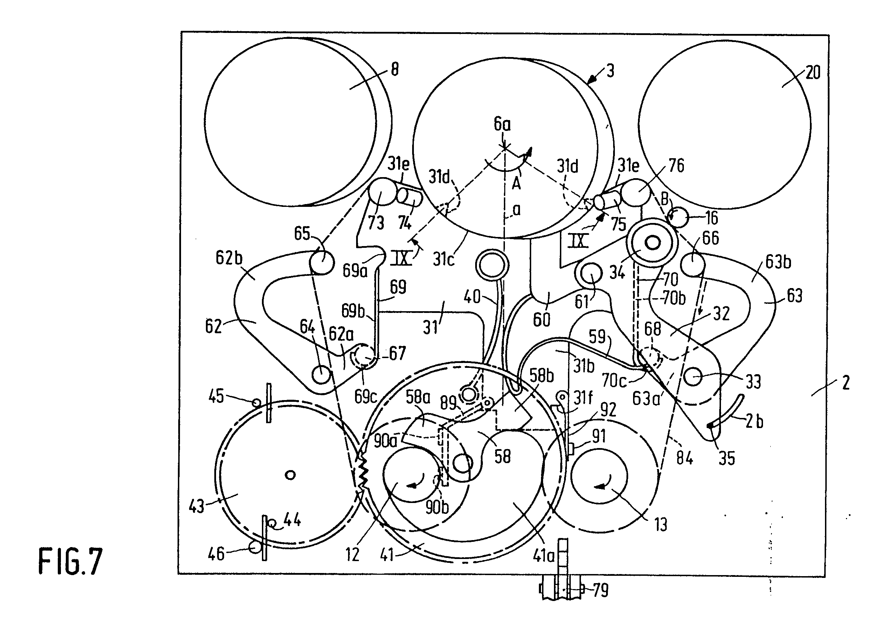

Near its front side which faces the drum assembly 3 the sliding plate 31 is connected to a first spring coupling 40 comprising a spring, for example, a blade spring, which is connected at one end to the sliding plate 31 and at the other end to a toothed servo wheel 41 which is mounted on a journal 42 which is mounted for rotation in the deck plate 2. The servo wheel 41 is situated above the sliding plate 31. By means of the first spring coupling 40, which is connected eccentrically to the servo wheel, the latter acts in the manner of a crank on the sliding plate 31 to move the plate from an initial position shown in Figs. 1 and 2 to one or the other of two fast-wind positions (of which one fast-wind position is shown in Fig. 4) and also to an end position, shown in Figs. 6, 7 and 9 to 12, which position corresponds to the normal operating condition of the apparatus. The servo wheel 41 has a uniform aperture 41a through which the winding spindle 12 passes. This arrangement allows the greater part of the servo wheel 41, which has a comparatively large diameter, to be situated between the winding spindles 12 and 13. The servo wheel 41 meshes with a gear wheel 43, which carries a switching pin 44 which actuates a reset switch 45 in the stop position shown in Fig. 2. In the operating position shown in Fig. 7 the switching pin 44 actuates a reset switch 46. In a manner not shown the switches 45 and 46 are electrically connected to an electronic circuit, which also actuates an electromagnet 47 (see Fig 3.) The armature of the electromagnet 47 is connected to a switching rod 48, whose end which is remote from the electromagnet is connected to a journal 49 on which a wheel 50 is journalled. Also connected to the journal 49 is a tension spring 51, which is arranged in line with the switching rod 48 and which, viewed in Fig. 3, tends to pull the wheel 50 towards the bottom left. In the stop condition of the apparatus the circumference of the wheel 50 abuts an abutment wall 52 on the underside of the deck plate 2. When, upon switching-on the apparatus, the electromagnet 47 is energized, via the electronic circuit, the wheel 50 is moved towards the top right viewed in Fig. 3 against the force of the spring 51, so that a driving connection is established between the shaft of the pulley 11 and a wheel 53 with which the wheel 50 is coupled. The wheel 53 is rigidly and coaxially connected to a comparatively small gear wheel 54, which meshes with a gear wheel 55. In turn the gear wheel 55 meshes with a gear wheel 56 which is fixedly connected to the gear wheel 43. Thus, when the electromagnet 47 is energized, a transmission is established between the shaft 8a of the motor 8 and the servo wheel 41. By means of this transmission the sliding plate 31 can be shifted from the initial position to the respective fast-wind positions and to the end position, and by reversing the direction of rotation of the motor 8 so that it rotates in the opposite direction to that indicated by the arrow A the sliding plate can be moved back. In the end position the switching pin 44 abuts against the reset switch 46 and (as stated previously) in the initial position the pin abuts against the reset switch 45. The position of the wheel 53 is detected by means of a position-detection means comprising a counter 57. The counter may comprise a photocell but alternatively it may comprise a Hall element, By coupling it to the electronic circuit the counter can thus establish over which distance the sliding plate 31 has been shifted towards the drum assembly after starting from the position shown in Fig. 2. This is important in particular for the fast-wind positions, of which one position is shown in Fig. 4. By constructing the electronic circuit as a microprocessor the initial position and the end position of the sliding plate 31 can be detected accurately by means of the reset switches 45 and 46.

Above the sliding plate 31 the journal 42 supports a bell-crank lever 58 (see Fig. 2) having a first end 58a which in the initial position of the sliding plate is pressed against a second spring coupling of the apparatus comprising a wire spring 59. The lever 58 is carried by the servo wheel 41 for rotation therewith, and as a result of the rotation of the servo wheel 41 a second end 58b of the bell-crank lever 58 acts against the wire spring 59, so that the wire spring exerts a force on the pressure-roller lever 32 to urge the pressure roller 34 against the capstan 16 with spring force in the position shown in Fig. 7.

In the upper side of the sliding plate 31 a V-shaped groove 60 is formed, whose walls constitute control means for a pin 61 arranged on the pressure-roller lever 32. When the sliding plate 31 is shifted from the initial position to the end position, i.e. from the position shown in Fig. 2 to that shown in Fig. 7, the pressure-roller lever 32 passes through the position shown in Fig. 4, in which the pin 61 is situated in the vertex of the V-shaped groove 60. Thus, the groove 60 provides an automatic guidance of the pressure-roller lever 32, with the pressure roller 34, towards the capstan 16. As a result of the coupling between the pressure-roller lever 32 and the arm 37 via the pin 35, the guidance provided by the groove 60 during the movement of the sliding plate 31 also causes the gear wheel 36 to be brought into the position shown in Fig. 8.

The deck plate 2 further carries two levers 62 and 63 mounted for pivotal movement relative to the deck plate, the left-hand lever 62 in Fig. 2 being pivotable about a pivot 64 and the righthand lever 64, together with the pressure-roller lever 32, being pivotable about the pivot. The two levers 62 and 63 are mirror-symmetrical relative to a plane of symmetry a which lies midway between and is parallel with the axes of the winding spindles 12 and 13 (see Fig. 7) and which contains the longitudinal axis 2aa of the slot 2a. On opposite sides of its pivotal axis each lever comprises two arms 62a, 62b and 63a, 63b. At the free ends of the arms 62b and 63b respectively, the levers carry tape guides 65 and 66 respectively, which are each provided with a cylindrical guide surface. At their free ends the arms 62a and 63a of the levers carry pins 67 and 68 respectively. The sliding plate 31 is provided with control means comprising guide surfaces 69 and 70 respectively which are situated on the side walls of the sliding plate 31 and are mirror symmetrical relative to the plane of symmetry a. As is shown in Fig. 2, the guide surfaces 69 and 70 have cylindrically concavely curved portions 69a and 70a respectively at their ends which are nearer the drum assembly 3. In the positions of the levers 62 and 63 shown in Fig. 2 (the stop condition of the apparatus) the pins 67 and 68 respectively bear against the surface portions 69a and 70a respectively and thus occupy stable positions. Adjoining the portions 69a and 70a the guide surfaces 69 and 70 have portions 69b and 70b respectively, against which the pins 67 and 68 bear in the position illustrated in Fig. 4, which corresponds to a fast-wind condition of the apparatus. The surface portions 69b and 70b each comprise a straight guide portion and adjacent the straight portion the guide surfaces 69 and 70 each have a concavely curved end portion 69c and 70c respectively. These end portions together with the adjacent parts of the straight guide portions are situated on projecting limbs of the sliding plate 31, which limbs have such dimensions that the curved end portions 69c and 70c are elastically deflexible to a small extent. As is illustrated in Fig. 7, the end portions 69c and 70c of the guide surfaces 69 and 70 ensure a stable positioning of the guides 65 and 66 respectively in the operating position of the apparatus.

In the position illustrated in Fig. 2 a rear portion 31b of the sliding plate 31 is situated in the area between the two winding spindles 12 and 13. At its front side facing the drum assembly 3 the sliding plate further has a concavely curved wall 31c whose centre of curvature in the end position of the sliding plate (Fig. 7) lies substantially on the axis of the drum assembly. This wall extends through an arc of approximately 90° and on it, near the ends thereof, are positioning means in the form of two projections 31d arranged mirror-symmetrically relative to the plane of symmetry a. At its ends the wall 31c adjoins two front portions 31e of the sliding plate which are disposed mirror-symmetrically relative to the plane of symmetry a. As is also shown in Fig. 1, these front portions 31e each carry two tape guides 73, 74 and 75, 76 which are rigidly connected to said front portions of the sliding plate by base portions 71 and 72 respectively of the tape guides. Each tape guide has a cylindrical circumferential surface, the axes of the tape guides 73 and 76 extending substantially perpendicularly to the deck plate 2 and the axes of the tape guides 74 and 75 extending substantially parallel to the axis of rotation 6a of the head disk 6.

In the lower drum 4 of the drum assembly 3 there is provided a positioning element constituted by a recess in the outer wall of the lower drum 4. In the present embodiment the recess is a circumferential groove 77 in the outer wall, the groove extending in a plane perpendicular to the axis of the drum assembly. As an alternative, separate local recesses may be formed in the outer wall of the lower drum 4. The advantage of the groove is that it can be formed easily and accurately in the outer wall of the lower drum 4. In the normal operating condition of the apparatus, in which the sliding plate 31 is in the end position (Fig. 7), the projections 31d engage the wall of the groove 77 (see Fig. 9), so that a correct positioning of the tape guides relative to the drum assembly 3 is ensured as a result of the rigid connection between the projections 31d and the tape guides 73 to 76. The wire spring 40 ensures that the projections 31d are pressed firmly into the groove 77. It is to be noted that in the embodiment shown in Figs. I-9 the projections 31d are situated at different levels relative to the deck plate 2 as a result of the arrangement of the groove 77 in a plane perpendicular to the axis of the drum assembly 3 (see Fig. 9). If as alternative positioning elements two local recesses are formed in the outer wall of lower drum 4 at the same level the projections 31d may also be situated at the same level.

At its rear side which is remote from the drum assembly 3 the portion 31b of the sliding plate 31 may carry an adjusting element 78 comprising a set-screw whose axis is preferably situated in the plane of symmetry a (see Fig. 9). By adjusting the set-screw 78 the positions of the various tape guides can be influenced because the projections 31d can be tilted in the groove 77 about the connecting line b between the two projections 31d by tightening or loosening said screw. The projections 31d and the groove 77 are conical-shaped in a cross-section taken in a plane containing the axis of the drum assembly for a smooth engagement between the walls of the projections and those of the groove (see Fig. 9). Suitably, the sliding plate 31 is formed as an integral unit together with the projections 31d and the tape guides 73, 74, 75 and 76, this unit being preferably made of a thermo-setting plastics. This has the advantage that the mould used for the manufacture of this unit accurately defines the various dimensions. Thus, tolerances of the various parts of the sliding plate are minimized.

The rear portion 31b of the sliding plate comprises a latching wall 31f, which actuates a latching member 79 which latches a cassette holder 80 arranged above the deck plate 2. Only a part of this cassette holder 80 is shown in Fig. 1. The latching member 79 is pivotably connected to the deck plate and is urged against the latching wall 31f by a tension spring 79 in the stop condition of the apparatus. In this position of the latching member 79 the cassette holder 80 is not latched. A magnetic-tape cassette, not shown, can then be inserted into the holder 80, after which the holder is moved downwards to move the cassette with the tape reels 81 and 82 towards the deck plate 2 until the reels 81 and 82 are engaged by the winding spindles 12 and 13 respectively. For an example of such a cassette holder and the lifting device cooperating therewith reference is made to the Applicant's EP-A-0128629 (PHN 10.702, herewith incorporated by reference). Alternatively, the holder 80 may be constructed as a holder which is pivotably connected to the deck 1. By sliding the sliding plate towards the end position the latching member 79 is pivoted under the influence of the spring 79a, thereby latching the cassette holder. Thus, the sliding plate also assists in latching and unlatching the cassette holder.

As shown in Fig. 3, the lower surface of the sliding plate carries brake means 83 comprising a member extending through the slot 2a and with two pointed end portions 83a which engage with the teeth of the fast-wind idler wheels 14 and 15a in the stop position of the sliding plate. In this way the winding spindles 12 and 13 are locked in the stop position. By moving the sliding plate towards the drum assembly 3 the brake means 83 are disengaged from the fast-wind idler wheels, so that these wheels can be driven without obstruction.

Instead of being inclined the axis of the drum assembly 3 and the axis of rotation 6a of the head disk 6 may extend perpendicularly to the deck plate 2. This alternative is illustrated in Fig. 10-12. The tape guides 74 and 75 also would then occupy perpendicular positions and the tape guides 73 and 76 would be inclined. With corresponding inclined positions of the tape guides 65 and 66 and the magnetic tape cassette the path of the magnetic tape 84 around the drum assembly 3 would then be similar to the situation illustrated in Figs. 1 - 9. An advantage of this alternative construction is that the projections 31d of the sliding plate 31 can be situated at the same level relative to the deck plate 2.

Before the magnetic-tape apparatus in accordance with the invention can be put into use a magnetic-tape cassette with tape reels 81 and 82 has to be brought into engagement with the winding spindles 12 and 13 by means of the cassette holder. The magnetic-tape cassette used here is, for example, of the kind disclosed and described in the Applicant's non-prepublished European Patent Application no. 85 200 477.9 with the publication number 162487 (PHN11.000, herewith incorporated by reference). The cassette is lowered into position on spring-loaded locating pins 85, two of which are shown in Fig. 1. The magnetic tape 84 wound on the reels 81 and 82 extends round tape guides 88 in the cassette, which are shown schematically in Figs. 1 and 2. When the magnetic-tape cassette is in position the tape guides 65 and 66, the pressure roller 34, and the tape guides 73, 74, 75 and 76 are separated from the drum assembly 3 by the front part of the magnetic tape 84. This is possible because the cassette housing is constructed so that space is available in the housing to receive said components. In this respect it is important that as a result of the action of the first control means 69, 70 the tape guides 65 and 66 occupy the correct positions and also that as a result of the action of the second control means 60 the pressure-roller lever is messed against a stop 86 (Fig. 1) and thereby keeps the pressure roller 34 positioned correctly. In this stop position the magnetic tape is clear of the pressure roller 34, the tape guides 65, 66 and the tape guides 73 to 76.

When the apparatus is switched on the motor 8 is started, causing the head disk 6 to rotate in the direction indicated by the arrow A. If the electromagnet 47 is now energized this has the result that in the manner described above the servo-wheel 41 begins to rotate in the direction indicated by the arrow C in Fig. 1, causing the brake means 83 to become disengaged from the fast-wind idler wheels 14 and 15a, the cassette holder 80 to be latched, the pin 28a on the coupling plate 28 to be guided in the section 31aa of the groove 31a in the sliding plate 31 and to remain in this section for the time being, and levers 62 and 63 to be pivoted by means of the guide surfaces 69 and 70 respectively, so that the magnetic tape 84 is lifted off the guides 88 in the cassette by the tape guides 65 and 66 but still remains clear of the drum assembly 3 and, as the pin 61 on the pressure-roller lever 32 traverses the first branch of the V-shaped groove 60, the pressure-roller lever remains in its initial position against the stop 86. Depending on the selected actuating button of the apparatus the sliding plate 31 is now moved into a position in which the pin 28a is still situated in the groove section 31aa or the sliding plate 31 is moved slightly further into the position shown in Figs. 4 and 5, in which the pin 28a is situated in the groove section 31ab. In the first fast-wind position the gear wheel 26 on the coupling plate 28 meshes with the fast-wind idler wheel 15a as shown in Fig. 3, whilst in the second fast-wind position the gear wheel 30 on the coupling plate meshes with the fast-wind idler wheel 14. Thus, in the first fast-wind position the magnetic tape 84 is wound rapidly into the tape reel 82 on the winding spindle 13 and in the second fast-wind position shown in Figs. 4 and 5 it is wound onto the tape reel 81 on the winding spindle 12. Fast winding is achieved in that at the end of the movement of the sliding plate 31, when the energization of the electromagnet 47 and consequently the rotation of the servo wheel 41 have stopped, the drive motor 20 is started, causing the pulley 21 to rotate in the direction indicated by the arrow D. This rotation causes the capstan 16 to rotate in the direction indicated by the arrow B, but in this position, as stated previously, the magnetic tape is clear of the pressure roller 34 and the capstan 16. For fast winding it is important that as a result of the shape of the cassette housing the magnetic tape 84 between the reels 81 and 82 is not in contact with any parts of the cassette housing (such as the guides 88). During fast winding the tape path is influenced only by the tape guides 65 and 66. The correct position of the sliding plate 31 for fast winding in either direction is determined by the position-detection means 57 which cooperates with the wheel 53. However, it is to be noted that this position can also be detected in other ways, for example, by means of wiper contacts which directly detect the position on the sliding plate 31.

If as a result of the energization of the electromagnet 47 the sliding plate 31 is moved from the initial position into the end position as shown in Figs. 6 to 12, the V-shaped groove 60 causes the pressure-roller lever 32 to be pivoted to the end position, and under the influence of the spring 59 the pressure roller 34 is pressed against the capstan 16 (see Fig. 7). During this pivotal movement of the lever 32 the arm 37 is pivoted by the pin 35 so that the gear wheel 36 meshes with the normal-mode idler wheel 15b and the tape is wound onto the reel 82 on the winding spindle 13 via the winding friction, not shown. When the sliding plate 31 is moved to the end position it is important that the magnetic tape 84, which has initially been led out of the cassette housing by the guides 65 and 66, is now further guided by the tape guides 73 and 76 and is wrapped around the drum assembly 3 through an angle of approximately 90°. This operation is referred to "threading-in" the magnetic tape. At the end of the movement the tape guides 74 and 75 play an important part in this operation. As a result of the inclination of the axis of rotation 6a of the head disk 6 and of the axis of the drum assembly the tape is now wrapped around the wall of the drum assembly along a helical path. This enables oblique tracks to be recorded on or to be read from the magnetic tape 84 by means of the magnetic heads 7 as the head disk 6 rotates. If the tape is thus wrapped around the drum assembly 3 it is important that the tape guides 73 to 76 are aligned accurately relative to the drum assembly. This is achieved by means of the projections 31d in conjunction with the groove 77 in the lower drum 4. This provides a very accurate yet easily obtained positioning of said projections. In this respect it is important that the projections 31d and the groove 77 are conical-shaped, so that during the engagement of these portions with the groove wall they are automatically aligned correctly relative to each other (see Fig. 9). In addition, the tape path may be corrected by means of the set screw 78, but if accurately manufactured parts, for example injection-moulded parts, are employed this adjustment may be omitted. The end position of the servo wheel 41 is defined by the switching pin 44 on the gear wheel 43 actuating the reset switch 46. In this end position the servo wheel 41 presses the projections 31d firmly into the groove 77 via the spring 40, and the spring 59 exerts a pressure on the pressure-roller lever 32 such that the pressure roller 34 is pressed against the capstan 16 with a predetermined force. At this instant the apparatus is in the normal operating condition and signals can be recorded on or read from the tape.

The sliding plate 31 may also carry a resilient arm 89 (Fig. 7) which is provided with friction means comprising two mutually spaced felt elements 90a and 90b, which can each be pressed against the winding spindle 12 in order to exert a counter-torque on the winding spindle 12 to keep the tape taut when the magnetic tape 84 is unwound. In the first fast-wind position the felt element 90a is pressed against the winding spindle 12 and in the normal operating position the felt element 90b is pressed against this spindle. The position of the felt element 90a relative to the sliding plate 31 is such that the in second fast-wind position, when the tape is taken up by means of the winding spindle 12, this felt element 90a is clear of the winding spindle. In the second fast-wind position only a felt element 91 arranged on a resilient arm 92 on the sliding plate 31 is pressed against the winding spindle 13 to exert a counter-torque on this winding spindle. This selective application of the felt elements is possible by moving the sliding plate 31 to the various positions.

In addition to the correct positioning of the tape guides 73 to 76 relative to the drum assembly 3 the magnetic-tape apparatus in accordance with the invention has the advantage that the sliding plate 31 can be formed integrally with various parts required for controlling the various apparatus functions. As described hereinbefore, the sliding plate 31 is formed integrally with means for controlling the drive of the winding spindles, means for controlling the pressure-roller lever, means for controlling pivotal arms carrying tape guides, means for controlling the brake means, means for controlling a latching means for the cassette holder, and means automatically positioning the tape guides. Further, the sliding plate 31 may carry the friction means for exerting a counter-torque on the respective winding spindle. A great advantage of this is that the control logic of the apparatus is locked directly to the position of the sliding plate 31. Thus, in each position of the sliding plate the tape guides occupy positions which correspond accurately to the selected apparatus function. This makes the magnetic-tape apparatus in accordance with the invention suitable for many uses and renders the apparatus very suitable for mass-production. One possible use is the recording and/or reproduction of digital audio signals, for which a compact magnetic tape apparatus is desirable.

It is to be noted that alternatively the servo wheel 41 may be driven by a separate motor, in which case the electromagnet 47 and the wheel 50 and the wheels driven thereby may be dispensed with. This separate motor is switched on and off and, if desired, its direction of rotation reversed, by the electronic circuit.

## Claims

1. A magnetic-tape apparatus comprising a deck (1) carrying a cylindrical drum assembly (3) provided with at least one rotatable magnetic head (7), on which deck a supporting member (31) carrying at least two tape guides (73 to 76) which are spaced from one another is guided for rectilinear movement towards and away from the drum assembly, the arrangement being such that when a tape cassette is positioned in or on the apparatus, a movement of the supporting member (31) towards the drum assembly (3) causes a part of the magnetic tape (84) in the cassette to be led towards the drum assembly, after which movement, when the supporting member is in an end position, said part of the magnetic tape is wrapped around a part of the circumference of the drum assembly by the tape guides, in which end position of the supporting member (31) the tape guides (73 to 76) are positioned relative to the drum assembly (3) by at least one positioning element (77) characterized in that the tape guides (73 to 76) are rigidly connected to the supporting member (31), the positioning element (77) is located on a non-rotatable drum section (4) of the drum assembly (3), and the supporting member carries positioning means (31d) which cooperate with the positioning element to position the tape guides (73 to 76) relative to the drum assembly in the end position of the supporting member.

2. A magnetic-tape apparatus as claimed in Claim 1, characterized in that the positioning means comprise two projections (31d) at the front side of the supporting member (31), which side faces the drum assembly (3) and the positioning element is constructed as a recess (77) in the outer wall of the non-rotatable drum section (4), which recess is engaged by the projections (31d) in the end position of the supporting member.

3. A magnetic-tape apparatus as claimed in Claim 2, characterized in that the projections (31d) and the recesses (77) are conical-shaped.

4. A magnetic-tape apparatus as claimed in Claim 2 or 3, characterized in that the recess is a circumferential groove (77) in the outer wall of the non-rotatable drum section (4).

5. A magnetic-tape apparatus as claimed in any of the preceding Claims, in which the drum assembly (3) comprises a lower drum (4) and an upper drum (5), characterized in that said non-rotatable drum section of the drum assembly, on which the positioning element (77) is located, is constituted by the lower drum (4).

6. A magnetic-tape apparatus as claimed in any of Claims 2 to 5, in which the supporting member is a sliding plate (31), characterized in that the front side of the sliding plate, which side faces the drum assembly (3), comprises a concavely curved wall (31c) whose centre of curvature in the end position of the sliding plate lies substantially on the axis of the drum assembly and which carries the projections (31d).

7. A magnetic-tape apparatus as claimed in Claim 6, characterized in that in the end position of the sliding plate (31) the projections (31d) are urged into the recess (77) under spring force.

8. A magnetic-tape apparatus as claimed in Claim 6 or 7, characterized in that the respective projections (31d) are situated in the direct vicinity of base portions (71, 72) of the tape guides (73 to 76), by which portions said guides are connected to the sliding plate (31).

9. A magnetic-tape apparatus as claimed in any one of the Claims 6 to 8, characterized in that at its rear side (31b) which is remote from the drum assembly the sliding plate (31) carries an adjusting element (78) by means of which the sliding plate, when in its end position, is pivotable about the connecting line (b) between the projections (31d).

10. A magnetic-tape apparatus as claimed in any of Claims 6 to 9, characterized in that the sliding plate (31) constitutes an integral unit with the projections (31d) and the tape guides (73 to 76), which unit is manufactured from a thermosetting plastics.

**Patentansprüche**

1. Magnetbandgerät mit einem Gestell (1), das ein zylinderförmiges Trommelsystem (3) trägt, das mit mindestens einem drehbaren Magnetkopf (7) versehen ist, wobei auf dem Gestell ein Tragelement (31) mit mindestens zwei in einem Abstand voneinander liegenden Bandführungselementen (73 bis 76) geradlinig zu und von dem Trommelsystem geführt wird, wobei diese Anordnung derart ist, daß wenn eine Bandkassette in das Gerät eingeführt wird, eine Bewegung des Tragelementes (31) in Richtung des Trommelsystems (3) dafür sorgt, daß ein Teil des in der Kassette vorhandenen Magnetbandes (84) in Richtung des Trommelsystems geführt wird, wobei nach dieser Bewegung, wenn das Tragelement sich in einer Endlage befindet, der genannte Teil des Magnetbandes durch die Bandführungselemente um einen Teil des Umfangs des Trommelsystems geschlungen wird, wobei die Bandführungselemente (73 bis 76) in dieser Endlage des Tragelementes (31) durch wenigstens ein Positionierungselement (77) gegenüber dem Trommelsystem (3) positioniert wird, dadurch gekennzeichnet, daß die Bandführungselemente (73 bis 76) an dem Tragelement (31) ortsfest angeordnet sind, wobei das Positionierungselement (77) auf einem nichtdrehbaren Trommelteil (4) des Trommelsystems (3) angeordnet ist, und wobei das Tragelement Positionierungsmittel (31d) aufweist, die mit dem Positionierungselement zusammenarbeiten zum Positionieren der Bandführungselemente (73 bis 76) gegenüber dem Trommelsystem in der Endelage des Tragelementes.

2. Magnetbandgerät nach Anspruch 1, dadurch gekennzeichnet, daß die Positionierungsmittel auf derjenigen Vorderseite des Tragelementes (31), die dem Trommelsystem (3) zugewandt ist, zwei Vorsprünge (31d) aufweisen, wobei das Positionierungselement als eine Ausnehmung (77) in der Außenwand des nicht-drehbaren Trommelteils (4) ausgebildet ist, wobei in der Endlage des Tragelementes die Vorsprünge (31d) sich in dieser Ausnehmung befinden.

3. Magnetbandgerät nach Anspruch 2, dadurch gekennzeichnet, daß die Vorsprünge (31d) und die Ausnehmungen (77) kegelförmig ausgebildet sind.

4. Magnetbandgerät nach Anspruch 2 oder 3, dadurch gekennzeichnet, daß die Ausnehmung eine umlaufende Rille (77) in der Außenwand des nicht-drehbaren Trommelteils (4) ist.

5. Magnetbandgerät nach einem der vorstehenden Ansprüche, wobei das Trommelsystem (3) eine Untertrommel (4) und eine Obertrommel (5) aufweist, dadurch gekennzeichnet, daß der genannte nicht-drehbare Trommelteil des Trommelsystems, auf dem sich das Positionierungselement (77) befindet, durch die Untertrommel (4) gebildet wird.

6. Magnetbandgerät nach einem der Ansprüche 2 bis 5, wobei das Tragelement eine Schiebeplatte (31) ist, dadurch gekennzeichnet, daß die dem Trommelsystem (3) zugewandte Vorderseite der Schiebeplatte eine konkav gekrümmte Wand (31c) aufweist, wobei die Mitte der Krümmung in der Endlage der Schiebeplatte im wesentlichen auf der Achse des Trommelsystems liegt und wobei diese Wand die Vorsprünge (31d) aufweist.

7. Magnetbandgerät nach Anspruch 6, dadurch gekennzeichnet, daß in der Endlage der Schiebeplatte (31) die Vorsprünge (31d) durch Federkraft in die Ausnehmung (77) gedrückt werden.

8. Magnetbandgerät nach Anspruch 6 oder 7, dadurch gekennzeichnet, daß die betreffenden Vorsprünge (31d) sich in der unmittelbaren Nähe von Basisteilen (71, 72) der Bandführungselemente (73 bis 76) liegen, wobei die Bandführungselemente durch diese Teile mit der Schiebeplatte (31) verbunden sind.

9. Magnetbandgerät nach einem der Ansprüche 6 bis 8, dadurch gekennzeichnet, daß die Schiebeplatte (31) auf der von dem Trommelsystem abgewandten Rückseite (31b) ein Einstellelement (78) aufweist, durch das die Schiebeplatte in der Endlage um die Verbindungslinie (b) zwischen den Vorsprüngen (31d) kippbar ist.

10. Magnetbandgerät nach einem der Ansprüche 6 bis 9, dadurch gekennzeichnet, daß die Schiebeplatte (31) mit den Vorsprüngen (31d) und den Bandführungselementen (73 bis 76) eine Einheit bildet, wobei diese Einheit aus einem thermohärtenden Kunststoff ausgebildet ist.

**Revendications**

1. Appareil à bande magnétique comprenant une platine (1) portant un ensemble de tambours cylindriques (3) pourvu au moins d'une tête magnétique tournante (7), un organe de support (31) portant au moins deux guides de bande (73 à 76) espacés l'un de l'autre étant guidé sur la platine de manière à se déplacer en ligne droite vers l'ensemble de tambours et depuis celui-ci, l'agencement étant tel que, lorsqu-une cassette de bande est positionnée sur ou dans l'appareil, un déplacement de l'organe de support (31) vers l'ensemble de tambours (3) provoque l'amenée d'une partie de la bande magnétique (84) de la cassette vers l'ensemble de tambours, après quoi, lorsque l'organe de support se trouve dans une position d'extrémité, ladite partie de la bande magnétique est appliquée autour d'une partie de la circonférence de l'ensemble de tambours par les guides de bande, et dans cette position d'extrémité de l'organe de support (31), les guides de bande (73 à 76) sont positionnés par rapport à l'ensemble de tambours (3) par au moins un élément positionneur (77), caractérisé en ce que les guides de bande (73 à 76) sont reliés rigidement à l'organe de support (31), l'élément positionneur (77) est placé sur une section de tambour non tournante (4) de l'ensemble de tambours (3) et l'élément de support porte des moyens positionneurs (31d) qui coopèrent avec l'élément positionneur pour positionner les guides de bande (73 à 76) par rapport à l'ensemble de tambours dans la position d'extrémité de l'organe de support.

2. Appareil à bande magnétique suivant la revendication 1, caractérisé en ce que les moyens positionneurs comprennent deux saillies (31d) au côté avant de l'organe de support (31) qui est tourné vers l'ensemble de tambours (3) et l'élément positionneur est réalisé sous la forme d'un évidement (77) dans la paroi extérieure de la section de tambour non tournante (4), cet évidement étant attaqué par les saillies (31d) dans la position d'extrémité de l'élément de support.

3. Appareil à bande magnétique suivant la revendication 2, caractérisé en ce que les saillies (31d) et les évidements (77) sont de forme conique.

4. Appareil à bande magnétique suivant la revendication 2 ou 3, caractérisé en ce que l'évidement est une gorge circonférentielle (77) dans la paroi extérieure de la section de tambour non tournante (4).

5. Appareil à bande magnétique suivant l'une quelconque des revendications précédentes, dans lequel l'ensemble de tambours (3) comprend un tambour inférieur (4) et un tambour supérieur (5), caractérisé en ce que la section de tambour non tournante de l'ensemble de tambours, sur lequel l'élément positionneur (77) est installé, est constituée par le tambour inférieur (4).

6. Appareil à bande magnétique suivant l'une quelconque des revendications 2 à 5, dans lequel l'organe de support est une plaque coulissante (31), caractérisé en ce que le côté antérieur de la plaque coulissante qui fait face à l'ensemble de tambours (3), comprend une paroi courbe concave (31c), dont le centre de courbure dans la position d'extrémité de la plaque coulissante est situé en substance sur l'axe de l'ensemble de tambours et qui porte les saillies (31d).

7. Appareil à bande magnétique suivant la revendication 6, caractérisé en ce que, dans la position d'extrémité de la plaque coulissante (31), les saillies (31d) sont sollicitées dans l'évidement (77) par la force d'un ressort.

8. Appareil à bande magnétique suivant la revendication 6 ou 7, caractérisé en ce que les saillies (31d) respectives sont situées dans le voisinage immédiat des embases (71, 72) des guides de bande (73 à 76), ces embases reliant ces guides à la plaque coulissante (31).

9. Appareil à bande magnétique suivant l'une quelconque des revendications 6 à 8, caractérisé en ce qu'à son côté postérieur (31b), qui est éloigné de l'ensemble de tambours, la plaque coulissante (31) porte un élément de réglage (78) au moyen duquel la plaque coulissante, lorsqu'elle se trouve dans la position d'extrémité, peut pivoter autour de la ligne de liaison (b) entre les saillies (31d).

10. Appareil à bande magnétique suivant l'une quelconque des revendications 6 à 9, caractérisé en ce que la plaque coulissante (31) constitue une unité d'un seul tenant avec les saillies (31d) et les guides de bande (73 à 76), cette unité étant fabriquée en une matière plastique thermodurcis-sable.

FIG.1

FIG.2

EP 0 197 602 B1

FIG.3

3

FIG.4

4

FIG.5

FIG.6

FIG.7

FIG.8

FIG.9

FIG.10

FIG.11

FIG.12